# EUROPÄISCHE PATENTSCHRIFT

(11) **EP 0 514 392 B1**
(45) Veröffentlichungstag und Bekanntmachung des Hinweises auf die Patenterteilung: **03.08.1994**
(21) Anmeldenummer: 91902202.0
(22) Anmeldetag: 12.01.1991
(51) Int. Cl.: C25C 7/02

(54) **ELEKTRODENELEMENT FÜR ELEKTROLYTISCHE ZWECKE UND DESSEN VERWENDUNG**
ELECTRODE ELEMENT FOR ELECTROLYTIC PURPOSES AND ITS USE
ELEMENT A ELECTRODE POUR ELECTROLYSE ET SON UTILISATION

(30) Priorität: 06.02.1990 DE 4003516
(43) Veröffentlichungstag der Anmeldung: 25.11.1992
(73) Patentinhaber: HERAEUS ELEKTROCHEMIE GMBH, D-63450 Hanau (DE)
(72) Erfinder: MAYR, Max, D-8755 Alzenau (DE); BLATT, Wolfgang, D-6480 Wächtersbach (DE); HEINKE, Harri, D-6455 Erlensee (DE)
(74) Vertreter: Grimm, Ekkehard
(86) Internationale Anmeldenummer: EP9100043
(87) Internationale Veröffentlichungsnummer: WO9112358

(56) Entgegenhaltungen:
- FR-A- 1 166 651
- FR-A- 2 213 804
- FR-A- 2 520 760
- US-A- 3 708 415
- US-A- 4 085 026

## Beschreibung

Die Erfindung betrifft ein Elektrodenelement für elektrolytische Zwecke, insbesondere für eine Elektrolysezelle zur elektrolytischen Abscheidung von Metallen aus Metallionen enthaltender Flüssigkeit, welches einen mit parallelen Seitenteilen versehenen Rahmen aus elektrisch isolierendem Kunststoff mit jeweils wenigstens einem Kanal zur Zufuhr eines flüssigen Ionenleiters und wenigstens einem Kanal zur Abfuhr dieses Ionenleiters aufweist, wobei zwischen beiden Kanälen als Elektrode wenigstens ein plattenförmiger aktiver Teil angeordnet ist, an dem der Ionenleiter entlang strömt, wobei die aktive Fläche der Elektrode von einer Ionenaustauscher-Membran abgedeckt ist, sowie dessen Verwendung.

Das Elektrodenelement soll vorzugsweise als Anode in eine Elektrolysezelle eingesetzt werden, wie sie beispielsweise aus der DE-B-36 40 020 bekannt ist; die in dieser Patentschrift beschriebene Elektrolysezelle besitzt durch eine Vielzahl von Kathoden und verhältnismäßig wenig Anoden ein günstiges Flächenverhältnis von Kathoden zu Anoden. Dabei ist es beispielsweise möglich, den mit Abwasser gefüllten Kathodenraum gegenüber den Anoden durch eine Membran abzuteilen, so daß sich die Anode bzw. die Anoden in einem abgeschlossenen Anolytraum befinden, welche die Anode vor der gegebenenfalls aggressive Substanzen führende Prozeßflüssigkeit schützen. Zwecks Umwälzung des Anolyten sind die Anolyträume jeweils mit einer eigenen Elektrolytzufuhr bzw. -abfuhrvorrichtung versehen. Die in den Anolyträumen befindlichen Anoden weisen eine flächige Struktur auf, wobei die Anodenflächen parallel zu den Oberflächen der Kathoden angeordnet sind.

Als problematisch erweist sich bei dieser bekannten Vorrichtung die Abdichtung und Korrosion der auf dem Rahmen der Anode aufzubringenden Membran sowie der Schutz der Membran gegen das auf den Nachbarkathoden abgeschiedene Metall, wobei insbesondere durch Herausziehen der Kathode die benachbarte Membran geschädigt werden kann.

Weiterhin ist aus der US-A-4,608,144 eine Elektrode bekannt, welche einen Rahmen aus elektrisch isolierendem Kunststoff aufweist, in den eine Elektrodenplatte auf Kunststoffbasis integriert ist. Unterteil und Oberteil des isolierten Rahmens sind jeweils mit einer kammerartigen Flüssigkeitszufuhr und Flüssigkeitsabfuhr versehen, welche in einer Vielzahl von Einzelkanälen münden, die durch die Oberfläche der Elektrodenstruktur vorgegeben sind. Durch den Einsatz mehrerer, zueinander parallel angeordneter, durch Membranen voneinander getrennter Elektrodenplatten ist es möglich, eine Bipolarelektrode mit wechselweise eingesetztem Anoden- und Kathodenteil aufzubauen; eine solche Bipolarelektrode ist beispielsweise für die Chloralkalielektrolyse geeignet. Eine Abscheidung von Metall ist auf dieser bipolaren Elektrode jedoch aufgrund des mangelnden Zwischenraums zwischen Kathode und Membran nicht möglich.

Aus der EP-A-00 36 640 ist eine Elektrodenanordnung in einer Metall-Rückgewinnungszelle zur Reinigung von industriellen Prozeßlösungen und Abwässern in einem Behälter bekannt, welche zur Halterung von plattenförmigen Elektroden einen offenen Rahmen aus parallelen Seitenstreifen als Abstandselemente aufweist, der aus elektrisch isolierendem, korrosionsbeständigem Kunststoff besteht; beidseitig der Anode sind Kathoden in einem durch den Rahmen vorgegebenen Abstand angeordnet, wobei keine Diaphragmen oder Membranen zwischen den Elektroden vorgesehen sind.

Die Zelle ist im Behälter integriert, wobei der Ein- und Auslauf zum Elektrolyseraum zwischen den Elektroden frei gehalten wird, um eine durch Gasblasen bewirkte Zirkulation zwischen Behältervolumen und Elektrolyseraum zu erzielen. Der Abstand zwischen den Elektroden muß einerseits groß genug sein, um Platz für abgeschiedene Metalle freizuhalten, andererseits nicht zu groß, damit eine ausreichende Metallabscheidung bis zu einer Restkonzentration von bis zu ≦ 1 ppm Metallionen erreicht wird.

Die Erfindung stellt sich die Aufgabe, ein Elektrodenelement anzugeben, dessen Elektrodenraum durch eine Membran ohne Dichtigkeitsprobleme und ohne Korrosionsprobleme, wie sie zum Beispiel durch Verschraubung und zugehörige Verschraubungselemente auftreten können, vom übrigen Elektrolytraum abzutrennen ist und einen Schutz der Membran gegen äußere mechanische Beschädigungen vorzusehen.

Das Elektrodenelement soll sowohl als Anode in einer Metallrückgewinnungszelle als auch als Kathode in einer elektrolytischen Oxidationszelle einsetzbar sein.

Die Aufgabe wird durch die kennzeichnenden Merkmale des Anspruchs 1 gelöst. Vorteilhafte Ausgestaltungen sind in den Unteransprüchen angegeben.

In einer bevorzugten Ausführungsform sind die beiden Seitenteile des Rahmens durch zwei Stege miteinander verbunden, wobei ein unterer Steg Öffnungen zur Zufuhr des flüssigen Ionenleiters und ein oberer Steg wenigstens eine Öffnung zur Abfuhr des Ionenleiters aufweist. Die als Tasche ausgebildete Ionenaustauschermembran wird zwischen den Seitenteilen des Rahmens und dem Schutzkasten eingeklemmt.

Die Elektrode wird durch zwei zueinander parallele Platten gebildet, welche an ihren Seitenwänden miteinander durch einen Falz verbunden sind, wobei der Falz zur Führung in den Seitenteilen des Rahmens dient; die Seitenteile des Rahmens sind mit einander gegenüberliegenden Führungsschienen versehen, die Nuten zum Einschieben der als Randstreifen ausgebildeten Falze aufweisen.

In einer bevorzugten Verwendung wird das Elektrodenelement als Anode in einer Metallrückgewinnungszelle eingesetzt; dabei ist die Anode beidseitig von zwei oder mehreren Kathoden umgeben.

In einer weiteren bevorzugten Verwendung wird das Elektrodenelement als Kathode in einer Oxidationszelle eingesetzt; dabei ist die Kathode einseitig mehreren Anodenelementen gegenüberstehend angeordnet oder beidseitig jeweils von Anodenelementen umgeben; weiterhin ist es auch möglich, zwei Kathoden mit Abstand einander gegenüberliegend anzuordnen, wobei zwischen den Kathoden mehrere Anoden sowie gegebenenfalls eine oder mehrere zusätzliche Kathoden eingesetzt sind. Das Elektrodenelement wird dabei insbesondere in Zellen mit fluoridhaltigem, flüssigem Ionenleiter verwendet.

Als vorteilhaft erweist sich der verhältnismäßig einfache Elektrodenaufbau, wobei auf den Einsatz korrosionsgefährdeter Schraubverbindungen verzichtet werden kann. Darüber hinaus erweist sich dieses Elektrodenelement als sehr wartungsfreundlich, da es aufgrund der einfach abzunehmenden Tasche eine rasche Kontrollmöglichkeit der Elektrodenbeschaffenheit sowie eine rasche Reinigung ermöglicht. Auch kann dieses Elektrodenelement in einem Behälter gelagert werden, wobei eine Membranaustrocknung verhindert wird.

Bei Verwendung des Elektrodenelements als Kathode in einer Oxidationszelle ergibt sich gegenüber den üblichen Zellen mit paarweise angeordneten Anoden und Kathoden eine erhebliche Ersparnis an Membranmaterial.

Im folgenden ist der Gegenstand der Erfindung anhand der Figuren 1 bis 5 c näher erläutert.
- Figur 1: zeigt in einer aufgebrochenen Darstellung die teilweise auf dem Schutzkastengehäuse herausgezogene Elektrode;
- Figur 2: zeigt einen Längsschnitt durch das Elektrodenelement, während in
- Figur 3: ein Querschnitt dargestellt ist.

Die Figuren 4 a, 4 b, 4 c zeigen schematisch den Einsatz des Elektrodenelements als Anode in einer Metallrückgewinnungszelle.

Die Figuren 5 a, 5 b, 5 c zeigen schematisch den Einsatz des Elektrodenelements als Kathode in einer Oxidationszelle.

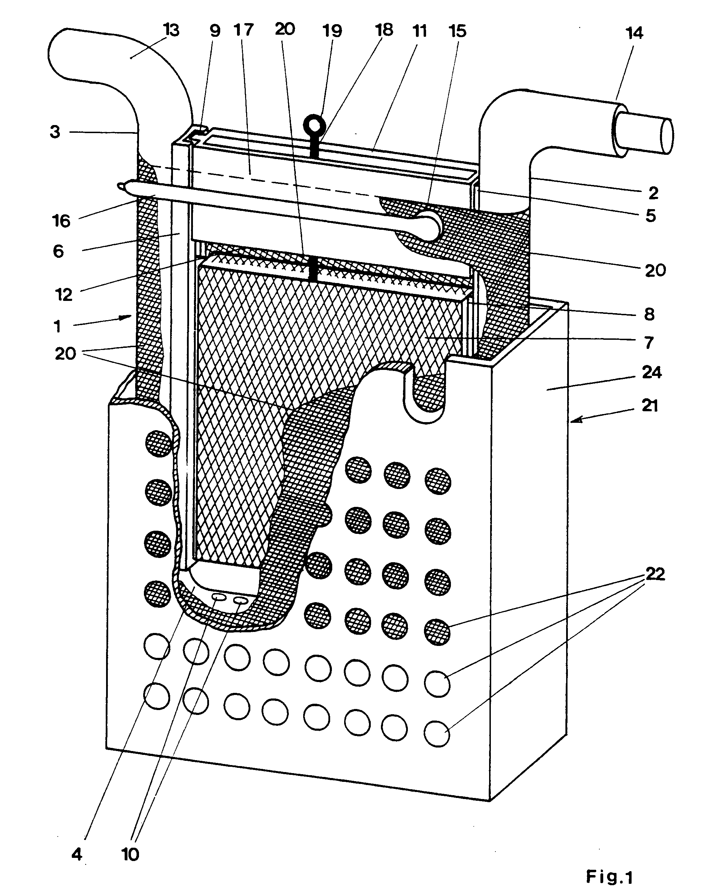

Gemäß Figur 1 weist der Rahmen 1 des Elektrodenelements eine Elektrodenhalterung aus zwei zueinander parallel verlaufenden Seitenteilen 2, 3 auf, welche an ihrem unteren Teil durch einen unteren Steg 4 zu einem U-förmigen Rahmenteil gebogen sind, wobei Seitenteile 2, 3 und Steg 4 ein Hohlrohrprofil besitzen. An den sich gegenüberliegenden Flanken sind die Seitenteile 2 und 3 jeweils mit einer U-förmigen Führungsschiene 5, 6 versehen, die zur Aufnahme der Randstreifen 8, 9 der plattenförmigen Elektrode 7 dienen, wobei diese in Form einer Kasten-Elektrode ausgebildet und mit ihren als Falz ausgebildeten Randstreifen bis zum Anschlag im Bereich des unteren Steges 4 eingeschoben ist. Die Elektrode 7 besteht aus Streckmetall, wobei als Material vorzugsweise Titan oder eine Titan-Basis-Legierung eingesetzt ist. Beim Einsatz als Anode weist sie eine elektroaktive Oberfläche auf. Sowohl Seitenteil 2 als auch unterer Steg 4 sind als hohlzylindrische Rohre ausgebildet, wobei der Steg 4 an seiner Oberseite Öffnungen 10 zur Zufuhr des flüssigen Ionenleiters aufweist, die zur Elektrode 7 gerichtet sind. Oberhalb der Elektrode 7 befindet sich ein in die Führungsschienen 5, 6 einschiebbarer oberer Steg 11, dessen Unterseite mit einer Öffnung 12 zur Abfuhr des flüssigen Ionenleiters versehen ist.

Die Zufuhr des Ionenleiters erfolgt über den rechtwinklig vom Seitenteil 3 abgewinkelten Einlaßstutzen 13, während das auf Seitenteil 2 aufgesetzte Rohrstück 14 als Blindrohr abgeschlossen ist und lediglich zur Halterung der Elektrode in der hier nicht dargestellten Elektrolysezelle dient. Der obere Steg 11 ist zur Abfuhr des Ionenleiters mit einem über eine Öffnung 15 herausgeführten Abflußrohr 16 verbunden. Der Rahmen 1 ist bis zu der gestrichelt dargestellten Linie 17 in eine nur teilweise dargestellte, als Tasche ausgebildete Ionenaustaucher-Membran 20 eingeführt, welche die beiden Seitenteile 2, 3 und den Steg 4 fest umschließt, wobei die Ionenaustauscher-Membran unterhalb ihres durch Linie 17 dargestellten oberen Randes einen der Öffnung 15 entsprechenden Durchlaß für das Abflußrohr 16 besitzt. Die Ionenaustauscher-Membran 20 ist in Höhe der Linie 17 mit ihrem oberen Rand auf dem oberen Steg 11 und den beiden Seitenteilen 2, 3 zwischen Steg 11, Rohr 13, 14 und dem weiter unten erläuterten Schutzkasten 21 eingeklemmt. Am oberen Rand der Elektrode 7 ist ein Stromzuleiter 18 befestigt, welcher durch den Innenraum des oberen Steges 11 herausgeführt ist und mit einem Anschlußkontakt 19 versehen ist.

Als Material für die aktive Fläche ist Titan oder eine Titan-Basis-Legierung vorgesehen; es ist jedoch auch möglich, andere Ventilmetalle, wie zum Beispiel Tantal, einzusetzen; außer in Form von Streckmetall ist auch der Einsatz von zusammenhängenden Blechen oder der Einsatz von elektrisch leitenden Keramikkörpern oder elektrisch leitenden Kunststoffkörpern mit plattenförmiger Oberfläche als Elektrode möglich; für den anodischen Einsatz ist dabei eine Aktivierung der Oberfläche vorgesehen.

Der als Zufuhrleitung dienende Einlaßstutzen 13 sowie Abflußrohr 16 sind zueinander parallel ausgerichtet. Zwischen der Ionenaustauscher-Membran 20 und der Elektrode 7 ist zum Schutz gegen Verletzungen der Membran durch das als Elektrodenmaterial bevorzugt eingesetzte Streckmetall eine Schutzmatte aus elektrolytbeständigem Kunststoff angeordnet, die hier zwecks besserer Übersicht nicht dargestellt ist; diese Matte kann beispielsweise rautenförmige Öffnungen aufweisen.

Nach der Einbringung des Rahmens 1 in die taschenförmige Ionenaustauscher-Membran 20 liegt deren oberer Rand am oberen Steg 11 an; der mit Membran versehene Elektrodenrahmen wird sodann in den mit Öffnungen 22 versehenen Schutzkasten 21 aus elektrisch isolierendem, elektrolytbeständigem Kunststoff eingeschoben. Die beidseitig in den Stirnflächen des Schutzkastens 21 vorgesehenen Öffnungen 22 erstrecken sich über die gesamte aktive Fläche der Elektrode 7, wobei in diesem Bereich das Verhältnis der von den Öffnungen gebildeten Gesamtfläche zur Stirnfläche der Elektrode im Bereich von 50 bis 90 % liegt. Hierdurch ist sichergestellt, daß einerseits eine ausreichende Benetzung der Ionenaustauscher-Membran 20 und andererseits deren äußere Abstützung erzielt wird. Die mit Ziffer 24 bezeichnete Seitenwand des Schutzkastens 21 ist eine geschlossene Fläche und enthält keine Öffnungen. Die Stirnfläche der Elektrode 7 weist eine Breite im Bereich von 400 bis 600 mm und eine Höhe im Bereich von 800 bis 1000 mm auf. Die auf der Elektrode erzielbare Stromdichte liegt im Bereich von 1 bis 2500 A/m².

Als Material für den Rahmen einschließlich der Mittelstege und Zufuhr- bzw. Abführleitungen sowie für den Schutzkasten hat sich Polypropylen bewährt. Die Dicke des Schutzkastenmantels liegt im Bereich von 3 bis 5 mm.

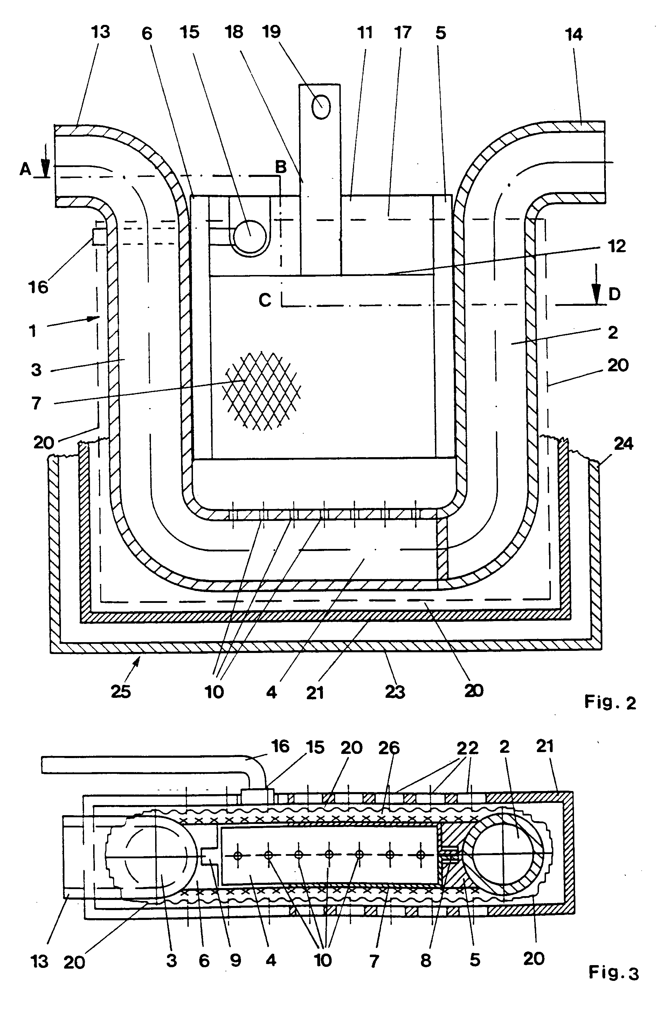

Gemäß Figur 2 wird der flüssige Ionenleiter über Zufuhrleitung 13 und das rohrförmige Seitenteil 3 dem ebenfalls rohrförmigen unteren Steg 4 zugeführt, welcher an seiner Oberseite mit Öffnungen 10 zur Abgabe des Ionenleiters versehen ist. Oberhalb des unteren Steges ist die plattenförmige Elektrode 7 angeordnet, die an ihrem oberen Rand mit einer Stromzuleitung 18 sowie dem Kontaktanschluß 19 versehen ist. Die Abfuhr des flüssigen Ionenleiters erfolgt über die im oberen Steg 11 befindliche Öffnung 15, und über das hier teilweise symbolisch durch gestrichelte Linien dargestellte Abflußrohr 16, welches die von der unteren Öffnung 12 des oberen Mittelsteges aufgenommene Flüssigkeit ableitet.

Der untere Steg 4 ist gegenüber dem ebenfalls rohrförmigen Seitenteil 2 hermetisch abgeschlossen, wobei Seitenteil 2 lediglich die bereits beschriebenen Halterungs- und Stabilisierungsfunktion ausübt. Im unteren Teil der Figur 2 ist symbolisch ein Teil des Bodens 23 und ein Teil der Seitenwand 24 des elektrolytischen Troges 25 ausschnittsweise dargestellt; der Schutzkasten 21 ist zwecks besserer Übersicht ebenfalls nur ausschnittsweise gezeigt.

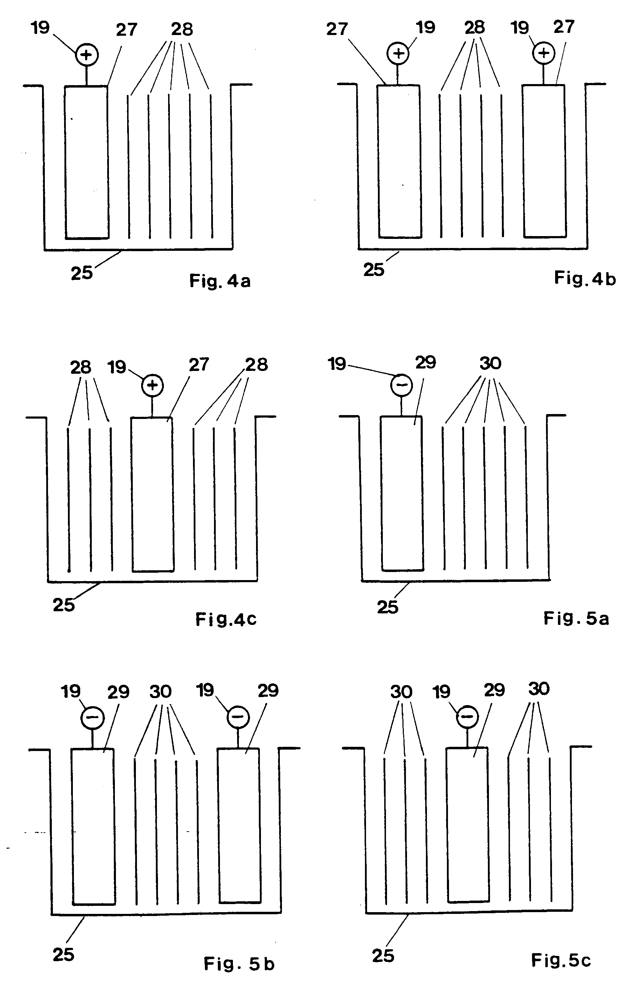

Figur 3 stellt einen Querschnitt entlang der Linien A-B-C-D der Figur 2 dar.

Gemäß Figur 3 befindet sich die plattenförmige Elektrode 7 mit ihren Randstreifen 8, 9 in den Führungsschienen 5, 6 der Seitenteile 2, 3. Die aus Streckmetall bestehende kastenförmige Elektrode 7 ist beidseitig mit einer Schutzmatte 26 aus elektrolytbeständigem Kunststoff versehen, welche die taschenförmige Membran 20 beim Einsetzen des Elektrodenrahmens vor Beschädigungen durch die Oberflächen der Elektrode 7 schützt, aufgrund ihrer Kastenform übt die Elektrode 7 eine Stützfunktion für die Membran 20 aus. Seitenteil 3 weist ein kreisrundes Hohlprofil zur Zufuhr des flüssigen Ionenleiters auf, während Seitenteil 2 lediglich Halterungsfunktionen ausübt und keinen Elektrolyten enthält. Der flüssige Ionenleiter tritt im Betriebsfall durch Öffnungen 10 im unteren Steg 4 in Richtung Elektrode 7 aus. Der komplett bestückte Rahmen 1 ist dabei von dem mit Öffnungen 22 versehenen Schutzkasten 21 taschenförmig umgeben, wobei sich die Öffnungen 22 beidseitig über die gesamte Breite der Kasten-Elektrode 7 erstrecken.

Im folgenden ist die Verwendung des Elektrodenelements als Anode und Kathode erläutert; dabei wird das als Anode eingesetzte erfindungsgemäße Elektrodenelement in den Figuren 4 a, 4 b, 4 c mit Ziffer 27 und das als Kathode eingesetzte erfindungsgemäße Elektrodenelement in den Figuren 5 a, 5 b, 5 c mit Ziffer 29 bezeichnet.

Das in einer Metallrückgewinnungszelle als Anode im Trog 25 eingesetzte Elektrodenelement 27 ist über Anschlußkontakt 19 mit dem positiven Pol einer zwecks besserer Übersicht hier nicht dargestellten Spannungsquelle verbunden und dabei so angeordnet, daß es gemäß Figur 4 a entweder einseitig mehreren Kathoden 28 gegenüberstehend angeordnet ist oder nach Figur 4b in Form zweier einander gegenüberliegender Elektrodenelemente 27, welche mehrere Kathoden 28 umfassen; darüber hinaus kann gemäß Figur 4 c ein einziges Elektrodenelement 27 als Anode beidseitig von jeweils einer oder mehreren Kathoden 28 umgeben sein. Die Kathoden 28 sind dabei gemäß der oben genannten DE-B-36 40 020 mit dem negativen Pol der Spannungsquelle verbunden.

Beim Einsatz des Elektrodenelements als Kathode im Trog 25 einer Oxidationszelle ist das über Anschlußkontakt 19 mit dem negativen Pol einer Spannungsquelle verbundene Elektrodenelement 29 gemäß Figur 5 a entweder einseitig mehreren Anoden 30 gegenüberstehend angeordnet oder nach Figur 5b in Form zweier einander gegenüberliegender Elektrodenelemente 29, welche mehrere Anoden 30 umfassen; weiterhin kann gemäß Figur 5 c das als Kathode dienende Elektrodenelement 29 beidseitig von einer oder mehreren Anoden 30 umgeben sein. Die Anoden sind dabei jeweils mit dem positiven Pol der Spannungsquelle verbunden.

## Patentansprüche

1. Elektrodenelement für elektrolytische Zwecke, insbesondere für eine Elektrolysezelle zur elektrolytischen Abscheidung von Metallen aus Metallionen enthaltender Flüssigkeit, welches einen mit parallelen Seitenteilen (2,3) versehenen Rahmen aus elektrisch isolierendem Kunststoff mit jeweils wenigstens einem Kanal zur Zufuhr eines flüssigen Ionenleiters und wenigstens einem Kanal zur Abfuhr dieses Ionenleiters aufweist, wobei zwischen beiden Kanälen als Elektrode (7) wenigstens ein plattenförmiger aktiver Teil angeordnet ist, an dem der Ionenleiter entlang strömt, wobei die aktive Fläche der Elektrode (7) von einer Ionenaustauscher-Membran (20) abgedeckt ist, dadurch gekennzeichnet, daß die Elektrode (7) an den Seitenteilen (2, 3) des Rahmens (1) herausnehmbar gehaltert ist, daß die Membran (20) als Tasche ausgebildet ist, welche wenigstens den in die Flüssigkeit eingetauchten Teil der Elektrode (7) umhüllt und daß die Tasche von einem mit Öffnungen (22) versehenen Schutzkasten (21) aus elektrisch isolierendem Kunststoff umgeben ist, wobei wenigstens ein Teil der Öffnungen (22) der aktiven Fläche der Elektrode (7) zugeordnet ist.

2. Elektrodenelement nach Anspruch 1, dadurch gekennzeichnet, daß ein die beiden Seitenteile des Rahmens verbindender unterer Steg (4) Öffnungen (10) zur Zufuhr des Ionenleiters aufweist und ein die beiden Seitenteile (2, 3) verbindender oberer Steg (11) mit wenigstens einer Öffnung (15) zur Abfuhr des Ionenleiters versehen ist.

3. Elektrodenelement nach Anspruch 1 oder 2, dadurch gekennzeichnet, daß die Tasche zwischen den Seitenteilen (2, 3) des Rahmens (1) und dem Schutzkasten (21) eingeklemmt ist.

4. Elektrodenelement nach einem oder mehreren der vorhergehenden Ansprüche 1 bis 3 dadurch gekennzeichnet, daß alle Öffnungen (22) des Schutzkastens (21) den aktiven Flächen der Elektrode (7) zugeordnet sind.

5. Elektrodenelement nach einem oder mehreren der Ansprüche 1 bis 4, dadurch gekennzeichnet, daß die beiden Seitenteile (2, 3) zusammen mit dem unteren Steg (4) aus einem U-förmig gebogenen Rohr gebildet sind, wobei ein Seitenteil (2) an seinem oberen Ende mit der Flüssigkeitszufuhr verbunden ist.

6. Elektrodenelement nach einem oder mehreren der Ansprüche 1 bis 5, dadurch gekennzeichnet, daß die aktive Fläche der Elektrode (7) aus zwei zueinander parallelen Platten besteht, welche an ihren Seitenwänden durch jeweils einen Falz in Form einer Kasten-Elektrode miteinander verbunden sind, welcher zur Führung in den Seitenteilen (2, 3) des Rahmens (1) dient.

7. Elektrodenelement nach Anspruch 6, dadurch gekennzeichnet, daß die Seitenteile (2, 3) des Rahmens (1) mit einander gegenüberliegenden Führungsschienen (5, 6) versehen sind, die Nuten zur Aufnahme der als Randstreifen (8, 9) ausgebildeten Falze aufweisen.

8. Verwendung des Elektrodenelements nach einem oder mehreren der vorhergehenden Ansprüche 1 bis 7 als Anode in einer Metallrückgewinnungszelle, wobei der Anode (27) wenigstens zwei Kathoden (28) zugeordnet sind.

9. Verwendung des Elektrodenelements nach Anspruch 8, wobei dessen Elektrode (7) zwei aktive Flächen aufweist und jeder aktiven Fläche wenigstens eine Kathode (28) zugeordnet ist.

10. Verwendung des Elektrodenelements nach einem oder mehreren der Ansprüche 1 bis 7 als Kathode (29) in einer Oxidationszelle, wobei der Kathode (29) wenigstens zwei Anoden (30) zugeordnet sind.

11. Verwendung des Elektrodenelements nach Anspruch 10, wobei dessen Elektrode (7) zwei aktive Flächen aufweist und wobei jeder aktiven Fläche wenigstens eine Anode (30) zugeordnet ist.

## Claims

1. An electrode element for electrolytic purposes, in particular for an electrolysis cell for the electrolytic separation of metals from fluid containing metal ions, which has a frame of electrically insulating plastic, provided with parallel side sections (2,3), with in each case at least one conduit for the supply of a fluid ion conductor and with at least one conduit for the removal of this ion conductor, in which between the two conduits, as electrode (7), at least one plate-shaped active portion is arranged, along which the ion conductor flows, in which the active surface of the electrode (7) is covered by an ion exchanger diaphragm (20), characterised in that the electrode (7) is held so as to be removable on the side sections (2, 3) of the frame (1), that the diaphragm (20) is constructed as a pouch, which at least encases the part of the electrode (7) immersed into the fluid and that the pouch is surrounded by a protective casing (21) of electrically insulating plastic, provided with apertures (22), in which at least a portion of the apertures (22) is associated with the active surface of the electrode (7).

2. An electrode element according to Claim 1, characterised in that a lower cross-piece (4), connecting the two side sections of the frame, has apertures (10) for the supply of the ion conductor and an upper cross-piece (11), connecting the two side sections (2, 3) is provided with at least one aperture (15) for the removal of the ion conductor.

3. An electrode element according to Claim 1 or 2, characterised in that the pouch is clamped between the side sections (2, 3) of the frame (1) and the protective casing (21).

4. An electrode element according to one or more of the preceding Claims 1 to 3, characterised in that all apertures (22) of the protective casing (21) are associated with the active surfaces of the electrode (7).

5. An electrode element according to one or more of Claims 1 to 4, characterised in that the two side sections (2,3) together with the lower cross-piece (4) are formed from a tube bent in a U-shape, in which one side section (2) is connected at its upper end with the fluid supply.

6. An electrode element according to one or more of Claims 1 to 5, characterised in that the active surface of the electrode (7) consists of two plates parallel to each other, which are connected with each other on their side walls by in each case a rabbet in the form of a box electrode, which serves for guidance in the side sections (2, 3) of the frame (1).

7. An electrode element according to Claim 6, characterised in that the side sections (2, 3) of the frame (1) are provided with guide rails (5,6) lying opposite each other, which have grooves to receive the rabbets, which are constructed as marginal strips (8,9).

8. The use of the electrode element according to one or more of the preceding Claims 1 to 7 as anode in a metal recovery cell, in which at least two cathodes (28) are associated with the anode (27).

9. The use of the electrode element according to Claim 8, in which its electrode (7) has two active surfaces and at least one cathode (28) is associated with each active surface.

10. The use of the electrode element according to one or more of Claims 1 to 7 as cathode (29) in an oxidation cell, in which at least two anodes (30) are associated with the cathode (29).

11. The use of the electrode element according to Claim 10, in which its electrode (7) has two active surfaces and in which at least one anode (30) is associated with each active surface.

## Revendications

1. Elément d'électrode pour électrolyse, en particulier pour une cellule d'électrolyse de précipitation électrolytique de métaux à partir d'un liquide contenant des ions métalliques, qui présente un cadre muni de parties latérales parallèles (2, 3), constitué d'une matière plastique électriquement isolante, ayant respectivement au moins un canal pour l'introduction d'un conducteur d'ions liquide et au moins un canal pour l'évacuation de ce conducteur d'ions, dans lequel au moins une partie active en forme de plaque, le long de laquelle le conducteur d'ions s'écoule, est disposée entre les deux canaux comme électrode (7), dans lequel la surface active de l'électrode (7) est recouverte d'une membrane échangeuse d'ions (20), caractérisé en ce que l'électrode (7) est maintenue de façon amovible sur les parties latérales (2, 3) du cadre (1), en ce que la membrane (20) forme une poche, qui enveloppe au moins la partie de l'électrode (7) plongée dans le liquide, et en ce que la poche est entourée d'une boîte de protection (21) munie d'ouvertures (22), constituée d'une matière plastique électriquement isolante, au moins une partie des ouvertures (22) étant associée à la surface active de l'électrode (7).

2. Elément d'électrode selon la revendication 1, caractérisé en ce qu'une traverse inférieure (4) reliant les deux parties latérales du cadre, présente des ouvertures (10) pour l'introduction du conducteur d'ions, et en ce qu'une traverse supérieure (11), reliant les deux parties latérales (2, 3), est munie d'au moins une ouverture (15) pour l'évacuation du conducteur d'ions.

3. Elément d'électrode selon la revendication 1 ou 2, caractérisé en ce que la poche est coincée entre les parties latérales (2, 3) du cadre (1) et la boîte de protection (21).

4. Elément d'électrode selon l'une quelconque des revendications antérieures 1 à 3, caractérisé en ce que toutes les ouvertures (22) de la boite de protection (21) sont associées aux surfaces actives de l'électrode (7).

5. Elément d'électrode selon l'une quelconque des revendications 1 à 4, caractérisé en ce que les deux parties latérales (2, 3) avec la traverse inférieure (4) sont formées d'un tuyau courbé ayant la forme d'un U, une partie latérale (2) étant reliée à son extrémité supérieure à l'entrée de liquide.

6. Elément d'électrode selon l'une quelconque des revendications 1 à 5, caractérisé en ce que la surface active de l'électrode (7) est constituée par deux plaques parallèles entres elles, qui sont reliées l'une à l'autre sur leurs parois latérales par une coulisse respective en formant une caisse d'électrode, lesdites coulisses étant utilisées pour le guidage dans les parties latérales (2, 3) du cadre (1).

7. Elément d'électrode selon la revendication 6, caractérisé en ce que les parties latérales (2, 3) du cadre (1) sont munies de rails de guidage (5, 6) se faisant face, présentant des rainures pour l'introduction des coulisses formées comme des bandes latérales (8, 9).

8. Utilisation de l'élément d'électrode selon l'une quelconque des revendications 1 à 7 déjà citées, comme anode dans une cellule de récupération de métal, au moins deux cathodes (28) étant associées à l'anode (27).

9. Utilisation de l'élément d'électrode selon la revendication 8, où l'électrode (7) de cet élément présentant deux surfaces actives et au moins une cathode (28) étant associée à chaque surface active.

10. Utilisation de l'élément d'électrode selon l'une quelconque des revendications 1 à 7, comme cathode (29) dans une cellule d'oxydation, au moins deux anodes (30) étant associées à la cathode (29).

11. Utilisation de l'élément d'électrode selon la revendication 10, l'électrode (7) de cet élément présentant deux surfaces actives et au moins une anode (30) étant associée à chaque surface active.
